# FASCICULE DE BREVET EUROPEEN

(11) **EP 0 713 044 B1**
(45) Date de publication et mention de la délivrance du brevet: **23.06.1999**
(21) Numéro de dépôt: 95402595.3
(22) Date de dépôt: 17.11.1995
(51) Int. Cl.: F16L 21/00, F16L 21/03, F16L 37/084, F16L 21/06, F16L 37/02

(54) **Elément tubulaire soudé pour un conduit de gaz chaud, et son procédé de réalisation**
Geschweisstes, rohrförmiges Element für eine Heissgasleitung und sein Herstellungsverfahren
Welded tubular element for a hot gas pipe and method for making same

(30) Priorité: 21.11.1994 FR 9413917
(43) Date de publication de la demande: 22.05.1996
(73) Titulaire: ETABLISSEMENTS POUJOULAT, F-79360 Beauvoir sur Niort (FR)
(72) Inventeur: Murzeau, Jack, F-79000 Niort (FR)
(74) Mandataire: Michelet, Alain

(56) Documents cités:
- EP-A- 0 546 893
- DE-A- 2 615 273
- FR-A- 1 049 913
- FR-A- 1 247 652
- FR-A- 1 553 460
- FR-A- 2 191 694

## Description

La présente invention concerne un élément tubulaire soudé pour un conduit de gaz chaud, un conduit de gaz chaud obtenu par emmanchement d'au moins deux de ces éléments tubulaires soudés, ainsi qu'un procédé de réalisation de tels éléments tubulaires.

Habituellement, les gaz chauds ou la fumée provenant d'une chaudière, circulent dans des conduits obtenus par simple emmanchement de deux ou plusieurs éléments tubulaires en aluminium ou en acier. Lorsque la température des gaz dépasse une certaine valeur, l'étanchéité du conduit est mal assurée. On constate alors des entrées d'air, par aspiration, à travers les raccords formés par les extrémités correspondantes des éléments emmanchés.

De tels appels d'air inopportuns ont des influences défavorables sur les gaz chauds. Il en résulte notamment que les valeurs réglementaires, imposées par la réglementation concernant les émissions de fumées, ne peuvent plus être garanties.

Jusqu'à présent, pour remédier à ces inconvénients et pour obtenir une étanchéité même approximative, lorsque l'on utilise des éléments tubulaires en aluminium ou en acier épais, ou lorsque les éléments tubulaires sont obtenus par agrafage des bords tenus en regard d'une tôle cylindriquement roulée, on insère, entre les parties emmanchées, un joint destiné à assurer l'étanchéité.

Le document US-A-4.027.901 décrit un raccord d'un conduit obtenu par emmanchement de deux tubes l'un dans l'autre. Chacun de ces tubes présente une première extrémité avec un premier bord définissant l'une des deux ouvertures de ce tube, et une deuxième extrémité avec un deuxième bord définissant l'autre ouverture. La deuxième extrémité est pourvue d'un évasement destiné à recevoir, par emmanchement, la première extrémité d'un autre tube en vue de former un conduit.

La première extrémité du tube présente une partie tronconique aboutissant au premier bord, d'un côté et adjacent à une première partie sensiblement cylindrique d'un diamètre donné et suivie d'une autre partie cylindrique d'un diamètre légèrement supérieur à celui de la première partie cylindrique. La transition entre la première et la deuxième partie cylindrique constitue un chant de faible dimension.

L'évasement de la deuxième extrémité consiste en un évasement conique aboutissant au deuxième bord, d'un côté, et adjacent, de l'autre côté, d'une suite de trois sections cylindriques de diamètre décroissant en s'éloignant du deuxième bord. La première de ces sections cylindriques est munie, à sa surface intérieure d'un élément annulaire dont la face éloignée du deuxième bord du tube constitue une première face destinée à tenir en place un joint mis en place entre deux tubes emmanchés. La deuxième face destinée à tenir le joint en place est formée par un chant formé par la transition de la deuxième vers la troisième partie cylindrique.

L'inconvénient d'un tel raccord est qu'il faut connaître le comportement, notamment la dilatation, de chacune des extrémités des tubes emmanchés et du joint destiné à être inséré entre les parties emmanchées, en fonction des températures auxquelles le conduit sera soumis. De plus, l'influence de la température sur les parties du conduit entraîne souvent une dilatation inégale, voire une déformation inégale, de ces parties. De telles déformations accroissent souvent le risque de non étanchéité dans une mesure qui ne peut être compensée que par la nature du joint.

Le document EP-A-0 546 893 décrit un élément tubulaire selon le préambule de la revendication 1.

Le but de l'invention est de proposer un élément tubulaire soudé pour un conduit de gaz chaud permettant de remédier aux inconvénients précités.

Conformément à l'invention, ce but est atteint par un élément tubulaire soudé comportant les caractéristiques de la revendication 1.

Cette disposition des extrémités de l'élément tubulaire apporte l'avantage de se trouver, grâce à la limitation de la conicité à un angle de l'ordre de 15°, à la limite du coincement des éléments tubulaires emmanchés. Ceci permet de garantir une étanchéité aussi dans le cas où les éléments tubulaires ont une section ovale.

De plus, cette disposition permet une coopération de la nervure de la première extrémité avec l'évasement conique de la deuxième extrémité de deux éléments tubulaires emmanchés, ce qui donne un bon accrochage de ces deux éléments qui se trouvent ainsi constamment en pression l'un contre l'autre. L'étanchéité ainsi obtenue est augmentée en même temps par la décompression de la pression intérieure qui est créée à l'intérieur de la première extrémité du premier élément tubulaire dans la section de la première nervure.

Enfin, les dispositions énoncées plus haut permettent d'obtenir une compatibilité entre élément tubulaires formés à partir de tôles d'épaisseurs différentes, sans que cela ne nuise à l'étanchéité. Cette dernière caractéristique est notamment obtenue par un calibrage extérieur de la première extrémité et un calibrage intérieur de la deuxième extrémité de l'élément tubulaire soudé.

L'invention concerne également les caractéristiques ci-après, considérées isolément ou selon toutes leurs combinaisons techniquement possibles :
- l'élément tubulaire comprend un joint d'étanchéité disposé à l'intérieur de la deuxième nervure annulaire ;
- l'élément tubulaire comporte des moyens destinés à coopérer avec un élément de fixation apte à fixer, de façon amovible, l'élément tubulaire à un autre élément tubulaire, après avoir emmanché les deux éléments tubulaires l'un dans l'autre ;
- l'élément de fixation est un collier à fermeture rapide ;
- les deux nervures annulaires sont obtenues par moulurage, sensiblement transversalement par rapport à l'axe de l'élément tubulaire ;
- l'élément tubulaire est coudé.

L'invention a également pour objet un conduit de gaz chaud obtenu par emmanchement d'au moins un premier élément tubulaire soudé dans un deuxième élément tubulaire soudé du genre décrit ci-avant.

Ce conduit de gaz chaud peut comprendre un joint d'étanchéité disposé dans un volume défini entre la première extrémité du premier élément tubulaire et la deuxième nervure du deuxième élément tubulaire.

L'invention a par ailleurs pour objet un procédé de réalisation d'un élément tubulaire soudé du genre décrit plus haut.

Conformément à l'invention, ce procédé comprend les étapes suivantes :
- mise en forme tubulaire d'une tôle fine d'acier,
- soudage au laser des deux bords tenus en regard l'un à l'autre de la tôle,
- formation d'un évasement à la première extrémité de l'élément tubulaire avec, en même temps, obtention d'une première nervure annulaire à la première extrémité de l'élément tubulaire, disposée à une distance axiale du premier bord et présentant, dans la partie orientée vers le premier bord, un angle de conicité inférieur à 15° par rapport à l'axe de l'élément tubulaire,
- formation d'un évasement à la deuxième extrémité de l'élément tubulaire avec, en même temps, obtention d'une deuxième nervure annulaire disposée à la deuxième extrémité, à une distance axiale du deuxième bord de l'élément tubulaire, d'une part, et d'un évasement conique aboutissant au deuxième bord de l'élément tubulaire, d'autre part, l'évasement conique ayant la même conicité que la première partie tronconique de la première extrémité de l'élément tubulaire.

Les caractéristiques et avantages de l'invention ressortiront de la description d'un exemple de réalisation de l'élément tubulaire soudé selon l'invention en se référant aux dessins annexés, dans lesquels :
- la Figure 1 montre un élément tubulaire soudé dans un mode préféré de réalisation de l'invention ;
- la Figure 2 montre la zone de jonction d'un conduit de gaz chaud obtenu par emmanchement de deux éléments tubulaires soudés selon la Figure 1 ;
- et la Figure 3 représente, de façon schématique, le jeu constant obtenu par le calibrage des éléments tubulaires selon l'invention.

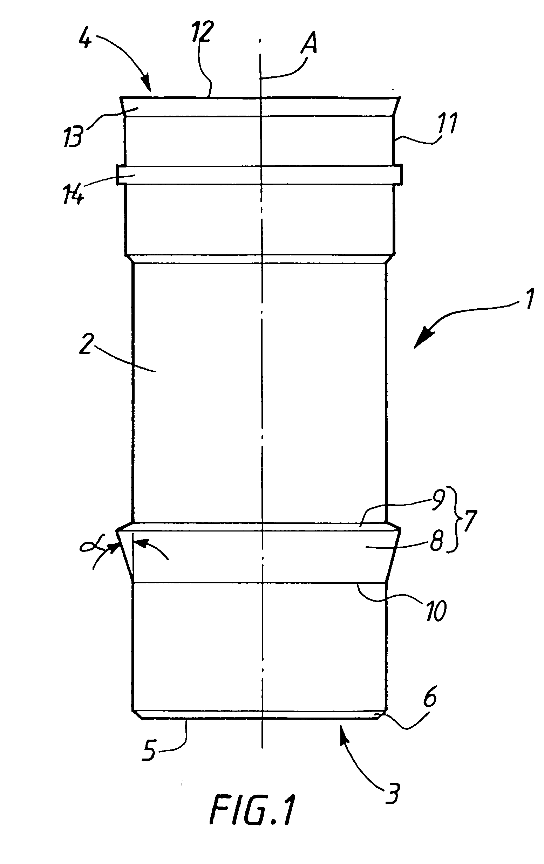

L'élément tubulaire soudé droit 1, représenté sur la Figure 1, est un tube à section circulaire autour d'un axe de symétrie A. Le tube 1 est en acier inoxydable. Sa paroi 2 a une épaisseur de 0,4 mm. Il est obtenu à partir d'une tôle roulée pour obtenir la forme cylindrique et par soudage au laser des bords tenus en regard l'un de l'autre. La soudure au laser permet d'obtenir un tube ayant une apparence comparable à celle de tuyaux étirés sans soudure, puisque ce mode de soudure provoque très peu d'aspérités.

Le tube 1 présente une première extrémité 3 et une deuxième extrémité 4. Il a un diamètre habituellement compris entre 125 mm et 350 mm et une longueur située entre environ 100 mm et 1200 mm.

La première extrémité 3 du tube 1 présente un premier bord 5 définissant l'une des deux ouvertures du tube 1. Le diamètre de l'ouverture défini par le premier bord 5 est légèrement inférieur à celui du corps du tube 1 et de l'extrémité 3 pour former dans cette dernière, sur une faible distance axiale, une partie tronconique 6 facilitant l'emmanchement du tube 1 dans un autre tube.

La première extrémité 3 du tube 1 est munie d'une première nervure annulaire 7 présentant essentiellement deux parties annulaires 8, 9. La première partie 8 est tronconique et convergente en direction du premier bord 5 du tube 1. Sa conicité est exprimée par un angle de conicité α mesuré par rapport à l'orientation de l'axe de symétrie A. L'angle α a une valeur comprise entre environ 6° et 15°.

La deuxième partie 9 de la première nervure 7 a également une forme tronconique, mais elle est convergente vers la deuxième extrémité 4 du tube 1. Sa conicité est nettement plus grande que celle de la première partie 8 pour des raisons exposées plus loin.

La première extrémité 3 est formée par évasement. La dimension du cône assurant le calibrage prend en compte l'épaisseur du métal de manière à assurer un calibrage extérieur de cette zone, depuis la nervure 7 jusqu'au premier bord 5.

La première nervure 7 peut avoir d'autres formes que celle représentée sur la Figure 1. Toutefois, il est essentiel de veiller à ce que la première partie 8 présente au moins partiellement, c'est-à-dire à partir d'une ligne 10 constituant la limite inférieure de la nervure 7, et sur une distance partielle de l'étendue axiale de la nervure 7, une conicité correspondant à celle définie ci-avant.

On entend ici par conicité toute forme de diamètre croissant. En pratique, les formes ou angles précis qui sont indiqués, sont ceux des outils utilisés, les formes et angles des produits résultants pouvant présenter de petites différences dues à l'élasticité du métal, par rapport à celle-ci.

La deuxième extrémité 4 du tube 1 possède un évasement 11 permettant à l'extrémité 4 de recevoir, lors de l'emmanchement de deux tubes l'un dans l'autre, la première extrémité de l'autre tube.

La deuxième extrémité 4 du tube 1 présente un deuxième bord 12 définissant la deuxième des deux ouvertures du tube 1.

L'évasement 11 comprend une partie tronconique 13, obtenue par déformation à froid ; il est destiné à faciliter l'emmanchement d'un tube dans l'autre.

Cet évasement 11 est réalisé avec un maintien extérieur et un cône intérieur permettant d'assurer le calibrage intérieur de cette zone.

La conicité de l'évasement tronconique 13 est la même que celle de la première partie 8 de la première nervure 7 du tube 1. Lors de l'emmanchement de deux tubes l'un dans l'autre, le tube supérieur se trouvera, par la première partie 8 de la première nervure 7, en appui sur l'évasement tronconique de la deuxième extrémité du tube inférieur.

L'évasement 11 est pourvu par ailleurs d'une deuxième nervure annulaire 14 disposée à une distance axiale du deuxième bord 12 du tube 1.

La deuxième nervure 14 contribue à l'étanchéité, aussi bien pour les gaz que pour les liquides. Pour les gaz, elle constitue une cavité de décompression entre l'intérieur et l'extérieur du tube. Pour les liquides, elle constitue un logement dont les parois sont écartées et créent une rupture de remontée de capillarité lorsque deux tubes sont assemblés.

La deuxième nervure 14 peut recevoir à l'intérieur de la rainure qu'elle constitue, vue de l'intérieur du tube 1, un joint d'étanchéité à lèvre 16. Pour des tubes à grand diamètre, il peut s'avérer avantageux de coller le joint sur la paroi intérieure de la deuxième nervure 14.

La mise en place d'un joint d'étanchéité à l'intérieur de la nervure 14 n'est pas nécessaire lorsque le conduit formé par deux tubes emmanchés l'un dans l'autre est utilisé en position verticale. Cependant, la mise en place d'un tel joint peut s'avérer avantageuse lorsqu'un tel conduit est utilisé en position horizontale.

Il est bien entendu que l'invention n'est pas limitée aux éléments tubulaires droits à section circulaire. Il est alors également concevable que l'élément tubulaire soit coudé ou/et soit à section sensiblement elliptique, sans sortir du principe de la présente invention.

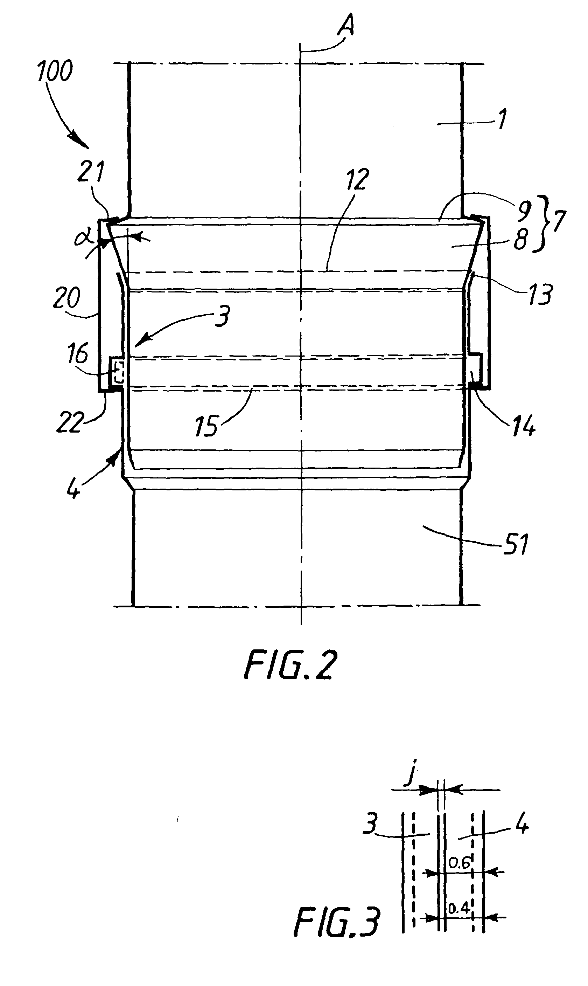

La Figure 2 montre une jonction d'un conduit de gaz chaud 100 obtenu par emmanchement de deux tubes selon l'invention, dont l'un est référencé en 1 et l'autre en 51. Les deux tubes 1 et 51 étant identiques en ce qui concerne la forme de leurs extrémités, les numéros de références des différentes parties du tube 1 sont attribués, de façon identique, aux éléments correspondants du tube 51.

Ainsi, le tube 1 est emmanché, avec sa première extrémité 3, dans la deuxième extrémité 4 du tube 51.

Lorsque les deux tubes 1 et 51 sont emmanchés l'un dans l'autre, la deuxième partie 8 de la première nervure 7 du tube 1 est en appui sur l'évasement conique 13 de la deuxième extrémité 4 du tube 51.

L'assise ainsi produite assure l'étanchéité de la jonction des deux tubes emmanchés l'un dans l'autre.

Grâce au calibrage extérieur des premières extrémités 3 des tubes et au calibrage intérieur des deuxièmes extrémités 4 des tubes, on obtient un jeu constant prédéfini à la jonction de deux tubes sans avoir à tenir compte de l'épaisseur de chacun des tubes.

La Figure 3 montre, de façon simplifiée, la disposition des parois des deux extrémités emmanchées l'une dans l'autre de deux tubes assemblés. Le jeu constant faible entre les parois est référencé j, les épaisseurs variables sont représentées par l'indication des épaisseurs 0,4 mm et 0,6 mm. Il va sans dire que le jeu constant peut être maintenu, de façon correspondante, lorsque l'un des tubes a une épaisseur de 0,8 mm.

Pour augmenter la stabilité de la jonction de deux tubes emmanchés l'un dans l'autre et pour assurer une bonne assise de la première nervure annulaire du tube 1 sur l'évasement conique 13 du deuxième tube 51, et cela indépendamment de l'orientation du conduit, la deuxième partie 9 de la première nervure 7, d'une part, et la deuxième nervure 14 dans la partie opposée au deuxième bord 12 du tube, d'autre part, sont formées de façon à pouvoir recevoir un collier 20.

Le collier 20 est une attache annulaire à fermeture rapide. Sa section en forme générale de "C" permet à la fois un assemblage rigide des deux tubes 1 et 51, et le bénéfice de l'élasticité du collier pour maintenir les deux éléments tubulaires ensemble, même sous l'influence de contraintes mécaniques ou thermiques.

Pour assurer une bonne assise des bords 21 et 22 du collier 20, respectivement sur la deuxième partie 9 de la première nervure annulaire 7, et sur la partie 15 de la deuxième nervure 14, les deux nervures annulaires 7 et 14 peuvent être formées de façon à ce que les faces d'appui ne soient pas planes, comme cela est représenté sur la Figure 2, mais qu'elles soient concaves, vues de l'extérieur du tube.

Les signes de référence insérés après les caractéristiques techniques mentionnées dans les revendications, ont pour seul but de faciliter la compréhension de ces dernières, et n'en limitent aucunement la portée.

## Revendications

1. Elément tubulaire soudé (1) pour un conduit de gaz chaud, se développant au moins sur une partie autour d'un axe (A) et comportant une première extrémité (3) avec un premier bord (5) définissant l'une des deux ouvertures de l'élément tubulaire (1), et une deuxième extrémité (4) avec un deuxième bord (12) définissant l'autre des deux ouvertures de l'élément tubulaire (1), la deuxième extrémité (4) étant pourvue d'un évasement (11) destiné à recevoir, par emmanchement, la première extrémité (3) d'un autre élément tubulaire (51) en vue de former un conduit de gaz chaud (100), la première extrémité (3) étant munie d'une première nervure annulaire (7), disposée à une distance axiale du premier bord (5) et présentant une première partie tronconique (8) orientée vers le premier bord (5) et la deuxième extrémité (4) étant pourvue d'un évasement conique (13) et ayant la même conicité (α) que la partie tronconique (8) de la première nervure annulaire (7), la première partie tronconique (8) étant, lors de l'emmanchement de deux éléments tubulaires (1, 51) l'un dans l'autre, en appui sur l'évasement tronconique (13), caractérisé en ce que la première partie tronconique (8) a un angle de conicité (α) inférieur à 15° par rapport à l'axe (A), en ce que l'évasement conique (13) de la deuxième extrémité (4) aboutit au deuxième bord (12) et en ce que la deuxième extrémité (4) est pourvue d'une deuxième nervure annulaire (14) disposée à une distance axiale du deuxième bord (12).

2. Elément tubulaire soudé selon la revendication 1, caractérisé en ce qu'il comprend un joint d'étanchéité (16) disposé à l'intérieur de la deuxième nervure annulaire (14).

3. Elément tubulaire soudé selon la revendication 1 ou 2, caractérisé en ce qu'il comporte des moyens (9, 15) destinés à coopérer avec un élément de fixation (20) apte à fixer, de façon amovible, l'élément tubulaire (1) à un autre élément tubulaire (51), après avoir emmanché les deux éléments tubulaires l'un dans l'autre.

4. Elément tubulaire soudé selon la revendication 3, caractérisé en ce que l'élément de fixation (20) est un collier à fermeture rapide.

5. Elément tubulaire soudé selon l'une quelconque des revendications 1 à 4, caractérisé en ce que les deux nervures annulaires (7, 14) sont obtenues par expansion sensiblement transversalement par rapport à l'axe (A) de l'élément tubulaire (1).

6. Elément tubulaire soudé selon l'une quelconque des revendications 1 à 5, caractérisé en ce qu'il est coudé.

7. Conduit de gaz chaud (100) obtenu par emmanchement d'au moins un premier élément tubulaire (1) soudé dans un deuxième élément tubulaire (51) soudé, les éléments tubulaires (1, 51) étant conformes à l'une quelconque des revendications 1 à 6.

8. Conduit de gaz chaud selon la revendication 7, caractérisé en ce qu'il comprend un joint d'étanchéité (16) disposé dans un volume défini entre la première extrémité (3) du premier élément tubulaire (1) et la deuxième nervure (14) du deuxième élément tubulaire (51).

9. Procédé de réalisation d'un élément tubulaire soudé conforme à l'une quelconque des revendications 1 à 6, comprenant les étapes:
- mise en forme tubulaire d'une tôle fine d'acier,
- soudage au laser des deux bords tenus en regard l'un de l'autre de la tôle,
- formation d'un évasement à la première extrémité de l'élément tubulaire avec, en même temps, obtention d'une première nervure annulaire à la première extrémité de l'élément tubulaire, disposée à une distance axiale du premier bord et présentant, dans la partie orientée vers le premier bord, un angle de conicité inférieur à 15° par rapport à l'axe de l'élément tubulaire,
- formation d'un évasement à la deuxième extrémité de l'élément tubulaire avec, en même temps, obtention d'une deuxième nervure annulaire disposée à la deuxième extrémité, à une distance axiale du deuxième bord de l'élément tubulaire, d'une part, et d'un évasement conique aboutissant au deuxième bord de l'élément tubulaire, d'autre part, l'évasement conique ayant la même conicité que la première partie tronconique de la première extrémité de l'élément tubulaire.

## Patentansprüche

1. Geschweißtes, rohrförmiges Element (1) für eine Heißgasleitung, das sich auf mindestens einem Teil um eine Achse (A) erstreckt und ein erstes Ende (3) mit einem ersten Rand (5), der eine der beiden Öffnungen des rohrförmigen Elements (1) definiert, und ein zweites Ende (4) mit einem zweiten Rand (12), der die andere der beiden Öffnungen des rohrförmigen Elements (1) definiert, umfaßt, wobei das zweite Ende (4) mit einer Erweiterung (11) versehen ist, die dazu bestimmt ist, durch Einstecken das erste Ende (3) eines weiteren rohrförmigen Elements (51) aufzunehmen, um eine Heißgasleitung (100) zu bilden, wobei das erste Ende (3) mit einer kreisförmigen Rippe (7) versehen ist, die in einem Axialabstand zu dem ersten Rand (5) angeordnet ist und einen ersten kegelstumpfartigen Teil (8) aufweist, der zu dem ersten Rand (5) ausgerichtet ist, und wobei das zweite Ende (4) mit einer konischen Erweiterung (13) versehen ist, die dieselbe Konizität (α) wie der kegelstumpfartige Teil (8) der ersten kreisförmigen Rippe (7) aufweist, wobei der erste kegelstumpfartige Teil (8) bei dem Einstecken von zwei rohrförmigen Elementen (1, 51) ineinander auf der kegelstumpfartigen Erweiterung (13) aufliegt, dadurch gekennzeichnet, daß der erste kegelstumpfartige Teil (8) einen Konizitätswinkel (α) von weniger als 15° in bezug zu der Achse (A) aufweist, daß die konische Erweiterung (13) des zweiten Endes (4) zum zweiten Rand (12) reicht und daß das zweite Ende (4) mit einer zweiten kreisförmigen Rippe (14) versehen ist, die in einem Axialabstand zu dem zweiten Rand (12) angeordnet ist.

2. Geschweißtes, rohrförmiges Element nach Anspruch 1, dadurch gekennzeichnet, daß es eine Dichtung (16) umfaßt, die im Inneren der zweiten kreisförmigen Rippe (14) angeordnet ist.

3. Geschweißtes, rohrförmiges Element nach Anspruch 1 oder 2, dadurch gekennzeichnet, daß es Mittel (9, 15) umfaßt, die dazu bestimmt sind, mit einem Befestigungselement (20) zusammenzuwirken, das in der Lage ist, auf lösbare Art und Weise das rohrförmige Element (1) an einem weiteren rohrförmigen Element (51) zu befestigen, nachdem die beiden rohrförmigen Elemente ineinandergesteckt wurden.

4. Geschweißtes, rohrförmiges Element nach Anspruch 3, dadurch gekennzeichnet, daß das Befestigungselement (20) ein Schnellverschlußband ist.

5. Geschweißtes, rohrförmiges Element nach einem der Ansprüche 1 bis 4, dadurch gekennzeichnet, daß die beiden kreisförmigen Rippen (7, 14) durch eine im wesentlichen quer zur Achse (A) ausgeführte Erweiterung des rohrförmigen Elements (1) gebildet sind.

6. Geschweißtes, rohrförmiges Element nach einem der Ansprüche 1 bis 5, dadurch gekennzeichnet, daß es gekrümmt ist.

7. Heißgasleitung (100), die durch Einstecken mindestens eines ersten geschweißten, rohrförmigen Elementes (1) in ein zweites geschweißtes, rohrförmiges Element (51) hergestellt ist, wobei die rohrförmigen Elemente (1, 51) einem der Anspriiche 1 bis 6 entsprechen.

8. Heißgasleitung nach Anspruch 7, dadurch gekennzeichnet, daß sie eine Dichtung (16) umfaßt, die in einem zwischen dem ersten Ende (3) des ersten rohrförmigen Elements (1) und der zweiten Rippe (14) des zweiten rohrförmigen Elements (51) definierten Volumen angeordnet ist.

9. Verfahren zur Herstellung eines geschweißten, rohrförmigen Elements nach einem der Ansprüche 1 bis 6, bestehend aus folgenden Schritten:
- Formen eines feinen Stahlblechs zu einem Rohr,
- Laserschweißen der beiden Ränder des Blechs, die einander gegenüberliegend gehalten werden,
- Bilden einer Erweiterung an dem ersten Ende des rohrförmigen Elements mit gleichzeitigem Erhalten einer ersten kreisförmigen Rippe an dem ersten Ende des rohrförmigen Elements, die in einem Axialabstand zu dem ersten Rand angeordnet ist und in dem zu dem ersten Rand ausgerichteten Teil einen Konizitätswinkel von weniger als 15° in bezug zu der Achse des rohrförmigen Elements aufweist,
- Bilden einer Erweiterung am zweiten Ende des rohrförmigen Elements mit gleichzeitigem Erhalten einer zweiten kreisförmigen Rippe, die am zweiten Ende in einem Axialabstand zu dem zweiten Rand des rohrförmigen Elements angeordnet ist, einerseits und einer konischen Erweiterung, die zu dem zweiten Rand des rohrförmigen Elements reicht, andererseits, wobei die konische Erweiterung dieselbe Konizität wie der erste kegelstumpfartige Teil des ersten Endes des rohrförmigen Elements aufweist.

## Claims

1. A welded tubular element (1) for a hot gas pipe, extending over at least one section around an axis (A) and comprising a first extremity (3) with a first rim (5) delineating one of both apertures of the tubular element (1), and a second extremity (4) with a second rim (12) delineating the other of both apertures of the tubular element (1), whereas the second extremity (4) is provided with a flaring (11) intended for receiving, by press-fitting, the first extremity (3) of another tubular element (51) in order to form a hot gas pipe (100), whereby the first extremity (3) is provided with a first annular rib (7) located at axial distance of the first rim (5) and having a first truncated section (8) oriented towards the first rim (5) and the second extremity (4) is provided with a conical flaring (13) and having the same conicity (α) as the truncated section (8) of the first annular groove (7), whereas the first truncated section (8) rests, when press-fitting both tubular elements (1, 51) into one another, on the conical flaring (13), characterised in that the first truncated section (8) has a conicity angle (α) smaller than 15° with respect to the axis (A), in that the conical flaring (13) of the second extremity (4) leads to the second rim (12) and in that the second extremity (4) is provided with a second annular rib (14) arranged at axial distance of the second rim (12).

2. A welded tubular element according to claim 1, characterised in that it comprises a gasket (16) arranged inside the second annular rib (14).

3. A welded tubular element according to claim 1 or 2, characterised in that it comprises means (9, 15) intended for co-operating with a fastening element (20) capable of removable fastening, the tubular element (1) to another tubular element (51), after having press-fitted both tubular elements into one another.

4. A welded tubular element according to claim 3, characterised in that the fastening element (20) is a snap-on collar.

5. A welded tubular element according to any one of claims 1 to 4, characterised in that both annular ribs (7, 14) are obtained by expansion substantially transversally with respect to the axis (A) of the tubular element (1).

6. A welded tubular element according to any one of claims 1 to 5, characterised in that it is elbow-shaped.

7. A hot gas pipe (100) made by press-fitting at least one first welded tubular element (1) into a second welded tubular element (51), the tubular elements (1, 51) being according to any one of claims 1 to 6.

8. A hot gas pipe according to claim 7, characterised in that it comprises a gasket (16) provided in a gap delineated between the first extremity (3) of the first tubular element (1) and the second rib (14) of the second tubular element (51).

9. A method for making a welded tubular element according to any one of claims 1 to 6, comprising the following steps:
- tubular forming of a thin steel sheet,
- laser welding of both rims of the sheet held opposite to one another,
- forming of a flaring at the first extremity of the tubular element with, at the same time, making of a first annular rib at the first extremity of the tubular element, arranged at axial distance of the first rim and having, in the section oriented towards the first rim, an angle of conicity smaller than 15° with respect to the axis of the tubular element.
- forming of a flaring at the second extremity of the tubular element with, at the same time, making of a second annular rib arranged at the second extremity, at an axial distance of the second rim of the tubular element, on the one hand, and of a conical flaring leading to the second rim of the tubular element, on the other hand, whereas the conical flaring shows the same conicity as the first truncated section of the first extremity of the tubular element.
